# EUROPEAN PATENT APPLICATION

(11) **EP 3 239 881 A1**
(43) Date of publication of application: **01.11.2017**
(21) Application number: 16202921.9
(22) Date of filing: 08.12.2016
(51) Int. Cl.: G06F 21/35, H04W 12/08, H04W 88/02, G06K 9/00

(54) **UNLOCKING METHOD AND APPARATUS**

(30) Priority: 29.04.2016 CN 201610282789
(71) Applicant: Beijing Xiaomi Mobile Software Co., Ltd., Beijing 100085 (CN)
(72) Inventor: GAO, Yi, Beijing, Beijing 100085 (CN); WANG, Hongqiang, Beijing, Beijing 100085 (CN); LONG, Hai, Beijing, Beijing 100085 (CN)
(74) Representative: dompatent von Kreisler Selting Werner - Partnerschaft von Patent- und Rechtsanwälten mbB

(57) **Abstract**

The present invention discloses an unlocking method and apparatus, a computer program and a recording medium, which pertain to the field of computer technology. The method comprises:
detecting currently input unlocking information; comparing the detected unlocking information with preset reference unlocking information; acquiring a user's state information sent by a target wearable device worn by the user if the detected unlocking information matches the preset reference unlocking information; performing unlocking if the user's state information does not meet a preset state condition, and maintaining a screen-locked state if the user's state information meets the preset state condition. Using this invention, users' information security can be improved.

## Description

### TECHNICAL FIELD

The present invention is related to the field of computer technology, and more particularly to an unlocking method and apparatus.

### BACKGROUND

With the development of computer and communications technologies, mobile terminals such as handsets and tablet computers are widely used and have become important tools in people's daily life and work. Typically, mobile terminals are provided with a screen-locking function.

A user may lock a screen of a mobile terminal via a screen-locking key. When the mobile terminal is in a screen-locked state, the user cannot operate the screen of the mobile terminal. When the user needs to use the mobile terminal, the user may first unlock the mobile terminal and then use it.

In the process of implementing the present invention, the inventor(s) finds/find that there is at least the following problem in the prior art: without a user's knowledge (for example, when the user is asleep), others may unlock the user's mobile terminal and acquire information stored therein or may operate the user's mobile terminal, resulting in poor information security for the user.

### SUMMARY

To solve the problem of the prior art, embodiments of the present invention provide an unlocking method and apparatus, a computer program and a recording medium as below.

According to a first aspect of the embodiments of the present invention, there is provided an unlocking method, comprising: detecting currently input unlocking information; comparing the detected unlocking information with preset reference unlocking information; acquiring a user's state information sent by a target wearable device worn by the user if the detected unlocking information matches the preset reference unlocking information; performing unlocking if the user's state information does not meet a preset state condition, and maintaining a screen-locked state if the user's state information meets the preset state condition.

Optionally, acquiring the user's state information sent by the target wearable device worn by the user comprises: sending a state information request to the target wearable device worn by the user to cause the target wearable device to detect the user's current state information; and receiving the state information sent by the target wearable device.

Optionally, before detecting the currently input unlocking information, the method further comprises: receiving the user's state information sent by the target wearable device worn by the user, and storing the user's state information. Acquiring the user's state information sent by the target wearable device worn by the user comprises: acquiring the stored user's state information.

Optionally, after receiving the user's state information sent by the target wearable device worn by the user and storing the user's state information, the method further comprises: detecting a current screen state; and if the user's state information meets the preset state condition and the current screen state is an unlocked state, locking the screen.

In this way, when the user is in the preset state, the screen can be locked automatically, thereby improving information security for the user.

Optionally, the method further comprises: determining an application corresponding to the acquired user's state information based on pre-stored correspondences between user's state information and applications, and setting the determined application to a disabled state.

In this way, when the user is in some specific states, some applications may be set to a disabled state. For example, when the user is running, game applications may be disabled, thereby improving the user's safety.

Optionally, the method further comprises: if the detected unlocking information matches the preset reference unlocking information and the user's state information meets the preset state condition, recording an unlocking failure event.

In this way, the user can view unlocking failure events recorded by the terminal and know a history of unlocking of the terminal.

According to a second aspect of the embodiments of the present invention, there is provided an unlocking apparatus, comprising: a first detecting module configured to detect currently input unlocking information; a comparing module configured to compare the detected unlocking information with preset reference unlocking information; an acquiring module configured to acquire a user's state information sent by a target wearable device worn by the user if the detected unlocking information matches the preset reference unlocking information; and an unlocking module configured to perform unlocking if the user's state information does not meet a preset state condition and to maintain a screen-locked state if the user's state information meets the preset state condition.

Optionally, the acquiring module comprises: a sending sub-module configured to send a state information request to the target wearable device worn by the user to cause the target wearable device to detect the user's current state information; and a receiving sub-module configured to receive the state information sent by the target wearable device.

Optionally, the apparatus further comprises: a receiving module configured to receive the user's state information sent by the target wearable device worn by the user, and store the user's state information. The acquiring module is configured to acquire the stored user's state information.

Optionally, the apparatus further comprises: a second detecting module configured to detect a current screen state; and a screen locking module configured to lock the screen if the user's state information meets the preset state condition and the current screen state is an unlocked state.

Optionally, the apparatus further comprises: a determining module configured to determine an application corresponding to the acquired user's state information based on pre-stored correspondences between user's state information and applications, and setting the determined application to a disabled state.

Optionally, the apparatus further comprises: a recording module configured to record an unlocking failure event if the detected unlocking information matches the preset reference unlocking information and the user's state information meets the preset state condition.

According to a third aspect of the embodiments of the present invention, there is provided an unlocking apparatus, comprising: a processor; and a memory configured to store instructions executable by the processor, wherein the processor is configured to: detect currently input unlocking information; compare the detected unlocking information with preset reference unlocking information; if the detected unlocking information matches the preset reference unlocking information, acquire a user's state information sent by a target wearable device worn by the user; and perform unlocking if the user's state information does not meet a preset state condition, and maintain a screen-locked state if the user's state information meets the preset state condition.

In one particular embodiment, the steps of the unlocking method are determined by computer program instructions.

Consequently, according to a fourth aspect, the invention is also directed to a computer program for executing the steps of an unlocking method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of this invention can produce the following advantageous effects. In the embodiments of this invention, currently input unlocking information is detected; the detected unlocking information is compared with preset reference unlocking information; a user's state information sent by a target wearable device worn by the user is acquired if the detected unlocking information matches the preset reference unlocking information; unlocking is performed if the user's state information does not meet a preset state condition, and a screen-locked state is maintained if the user's state information meets the preset state condition. In this way, when the user's state information meets the preset state condition (for example, when the user is in a sleep state), unlocking will not be performed even if the detected unlocking information matches the preset reference unlocking information, thereby improving information security for the user.

It should be understood that both the foregoing general description and the following detailed description are only exemplary and explanatory and are not restrictive of the invention.

### BRIEF DESCRIPTION OF THE DRAWINGS

In order to illustrate the technical solutions provided by the embodiments of the present invention more clearly, a brief introduction will be given hereinafter to the accompany drawings referred to in the description of the embodiments. Apparently, the drawings referred to in the description below are merely for illustrating some embodiments of the present invention, and other drawings may be envisaged by those skilled in the art according to these drawings without making any creative effort.
Fig. 1 is a flow chart showing an unlocking method according to an embodiment of the invention.
Fig. 2 is an outline diagram of a system according to an embodiment of the invention.
Fig. 3 is a schematic diagram of an interface display according to an embodiment of the invention.
Fig. 4 is a schematic diagram of an interface display according to another embodiment of the invention.
Fig. 5 is a schematic structural diagram of an unlocking apparatus according to an embodiment of the invention.
Fig. 6 is a schematic structural diagram of an unlocking apparatus according to an embodiment of the invention.
Fig. 7 is a schematic structural diagram of an unlocking apparatus according to an embodiment of the invention.
Fig. 8 is a schematic structural diagram of an unlocking apparatus according to an embodiment of the invention.
Fig. 9 is a schematic structural diagram of an unlocking apparatus according to an embodiment of the invention.
Fig. 10 is a schematic structural diagram of an unlocking apparatus according to an embodiment of the invention.
Fig. 11 is a schematic structural diagram of a terminal according to an embodiment of the invention.

### DETAILED DESCRIPTION

To make the objects, the technical solutions and the advantages of the present invention more clear, implementations of the present invention will be described in further detail below in conjunction with the drawings.

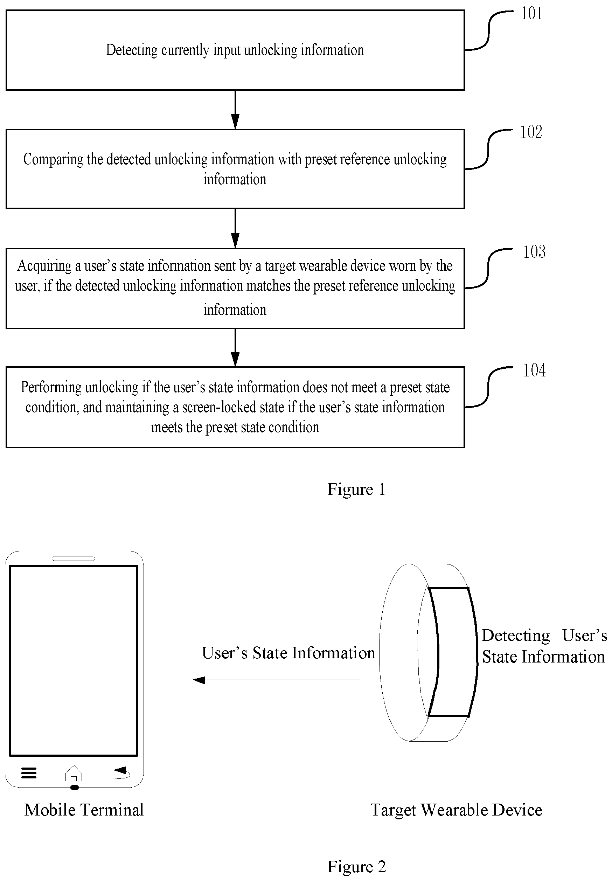

An embodiment of the present invention provides an unlocking method performed by a terminal. The terminal may be a mobile terminal such as a handset or a tablet computer. The mobile terminal may comprise a detecting unit which may be configured to detect currently input unlocking information. The detecting unit may be a fingerprint signal detecting unit, a touch signal detecting unit or any other detecting unit. The mobile terminal may comprise a wireless communication module which may be configured to establish a connection with a target wearable device. The mobile terminal may comprise a transceiver which may be configured to receive state information sent by the target wearable device. The mobile terminal may comprise a processor which may be configured to determine whether the acquired unlocking information matches preset reference unlocking information and whether the user's state information meets a preset state condition so as to perform unlocking or maintain a screen-locked state according to a result of the determination. The mobile terminal may further comprise a memory which may be configured to store data received or generated in the above process and codes for executing the unlocking method. The codes may be stored in a system program, and may also be stored as an independent application program. In addition, the mobile terminal may further comprise components, such as a sensor and a power supply. Fig. 2 is an outline diagram of a system according to the invention, in which a mobile terminal and a target wearable device may be included.

As shown in Fig. 1, the process flow of the method may comprise the following steps 101-104.

In step 101, currently input unlocking information is detected.

In practical implementation, a mobile terminal may be provided with a screen-locking function. Under a screen-locked state, a user cannot operate a screen of the mobile terminal. When a certain user (referred to as a first user) wants to use the mobile terminal, the first user may unlock the mobile terminal. There may be various manners for unlocking the mobile terminal, such as fingerprint unlocking, password unlocking and pattern unlocking. Accordingly, when unlocking the mobile terminal, the first user needs to input unlocking information, such as fingerprint information, password information or pattern information, and then the mobile terminal may detect the currently input unlocking information.

Taking the fingerprint unlocking as an example, the mobile terminal may be provided with a fingerprint detecting component which may be a fingerprint sensor in the prior art. The fingerprint sensor may be an optical fingerprint sensor, a semiconductor capacitive sensor, a semiconductor thermo-sensitive sensor, a semiconductor pressure-sensitive sensor, an ultrasonic sensor or a radio-frequency (RF) sensor or the like, which will not be limited in embodiments of the present invention. When the first user wants to unlock the mobile terminal, he/she may touch a corresponding position of the fingerprint detecting component with a finger, and then the fingerprint detecting component may detect fingerprint information of the first user.

In Step 102, the detected unlocking information is compared with preset reference unlocking information.

In practical implementation, the mobile terminal may store reference unlocking information in advance. The reference unlocking information may be reference fingerprint information, unlocking pattern information set by a user, or an unlocking password. When detecting the currently input unlocking information, the mobile terminal may compare the detected unlocking information with the reference unlocking information and determine whether they are matched. If the mobile terminal determines that the detected unlocking information does not match the preset reference unlocking information, no subsequent process may be performed. If the mobile terminal determines that the detected unlocking information matches the preset reference unlocking information, the process of Step 103 may be performed.

In Step 103, a user's state information sent by a target wearable device worn by the user is acquired, if the detected unlocking information matches the preset reference unlocking information.

In practical implementation, an owner (referred to as a target user) of the mobile terminal may wear a target wearable device. After the target user wears the target wearable device, the target wearable device may detect state information of the target user. The target wearable device may be any wearable device in the prior art, such as a smart band, a smart watch or smart glasses. The target wearable device may be provided with a wireless communication module, such as a Bluetooth module or a WIFI module, to establish a connection with the mobile terminal, as shown in Fig. 2. In a case where the target wearable device is provided with a Bluetooth module, the target wearable device may send the detected state information directly to the mobile terminal through the Bluetooth module. In a case where the target wearable device is provided with a WIFI module therein, the target wearable device may send the detected state information to a server, and then the server sends the detected state information to the mobile terminal. The server may send the received state information to the mobile terminal in the form of a push message. The server may also send the state information to the mobile terminal after receiving a state information request sent by the mobile terminal.

The target wearable device may also be provided with a sensor for detecting a user's state, such as an acceleration sensor, a gravity sensor or a heart rate sensor, and thus may detect the user's state information. The state information may at least include a sleep state, a running state, a walking state and a normal state (i.e., a state in which the user sits up or lies down). For example, a smart band and a smart watch may identify the user's sleep state, walking state, running state and the like through a gravity sensor, a heart bit sensor, etc. Smart glasses may detect whether the user's eyes are in a closed state through a built-in photographing component, and thus may determine whether the user is in a sleep state. The target wearable device may send the detected state information of the target user to the mobile terminal. As such, after detecting the currently input unlocking information, the mobile terminal may acquire the state information of the target user sent by the target wearable device for subsequent processing. There may be various trigger conditions for sending the state information of the target user by the target wearable device to the mobile terminal. Two feasible approaches are given below.

Approach I: the mobile terminal sends a state information request to the target wearable device worn by the user to cause the target wearable device to detect the user's current state information, and receives the state information sent by the target wearable device.

In practical implementation, the mobile terminal may send the state information request to the target wearable device after detecting the unlocking information input by the target user. The target wearable device may detect current state information of the target user after receiving the state information request, and then send the detected state information to the mobile terminal. Then, the mobile terminal may receive the state information sent by the target wearable device.

Approach II: the mobile terminal receives the user's state information sent by the target wearable device worn by the user, and stores the user's state information; and the mobile terminal acquires the stored user's state information after detecting the currently input unlocking information.

In practical implementation, the target wearable device may detect the state information of the target user every time a preset detection cycle passes, and then may send the detected state information to the mobile terminal. Alternatively, the target wearable device may send, after detecting that the state information of the target user changes, the changed state information of the target user to the mobile terminal. Then, the mobile terminal may receive the state information of the target user sent by the target wearable device and store the state information. When detecting the unlocking information, the mobile terminal may acquire from the locally stored state information the state information most recently received.

In Step 104, unlocking is performed if the user's state information does not meet a preset state condition, and a screen-locked state is maintained if the user's state information meets the preset state condition.

In practical implementation, the mobile terminal may determine whether the acquired state information of the target user meets the preset state condition after acquiring the user's state information. If the mobile terminal determines that the user's state information does not meet the preset state condition, the mobile terminal may perform unlocking. For example, the mobile terminal may perform unlocking if it determines that the state information of the target user is not a sleep state. The mobile terminal may maintain a screen-locked state if it determines that the user's state information meets the preset state condition. The preset state condition may be that the state information of the target user is a sleep state. Accordingly, if the target user is in the sleep state and the mobile terminal determines that the detected unlocking information matches the preset reference unlocking information, it may imply that another user wants to unlock the mobile terminal, and the mobile terminal may maintain the screen-locked state.

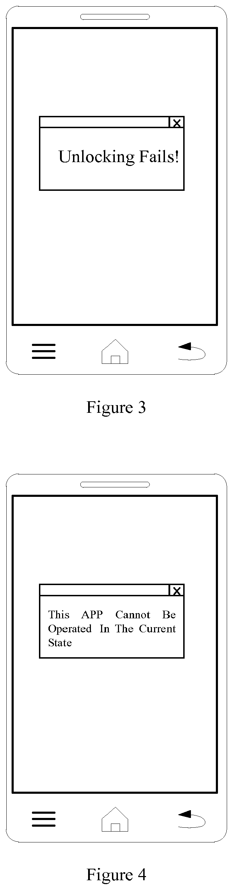

For example, when a user A is in a sleep state and a user B wants to unlock a handset of the user A, the handset of user A will maintain a screen-locked state even if the handset of the user A detects that unlocking information input by the user B is correct, because the state information of the user A is the sleep state. In this way, the user B will fail to unlock the handset of the user A, thereby improving the information security for the user A. In addition, the mobile terminal may further display prompt information of unlocking failure, as shown in Fig. 3.

Optionally, the use of an application by the user may be controlled according to different states of the user by performing a process as follows: determining an application corresponding to the acquired user's state information based on pre-stored correspondences between user's state information and applications, and setting the determined application to a disabled state.

In practical implementation, the mobile terminal may pre-store correspondences between user's state information and applications. When acquiring the state information of the target user sent by the target wearable device, the mobile terminal may search the correspondences for an application corresponding to the state information of the target user, and then may set the searched out application to a disabled state.

For example, the user's state information may include a sleep state, a running state, a walking state and a normal state. The sleep state may correspond to all applications currently installed on the mobile terminal. Thus, when the target user is in a sleep state, any application in the mobile terminal cannot be used. The running state may correspond to all game applications. Thus, when the target user in a running state, applications other than game applications, such as phone call and music applications, can be used. In addition, it is possible to set no disabled application for the normal state and the running state, so that all applications can be used in these states. The correspondences may be set by the target user.

After unlocking the mobile terminal successfully, the target user may click an icon on the mobile terminal which corresponds to an application to be used. Accordingly, the mobile terminal may receive a selection instruction corresponding to the application, and then may determine whether the application is in a disabled state. If the application is not in the disabled state, the mobile terminal may launch the application. If the application is in the disabled state, the mobile terminal may not launch the application but may display preset prompt information, e.g., "This APP Cannot Be Operated in the Current State", as shown in Fig. 4.

Optionally, the mobile terminal may record an unlocking failure event if it determines that the user's state information meets the preset state condition.

In practical implementation, if the mobile terminal determines that the detected unlocking information matches the preset reference unlocking information, it may determine whether the acquired state information of the target user meets the preset state condition. If the mobile terminal determines that the user's state information meets the preset state condition, the mobile terminal may maintain a screen-locked state, and may further record an unlocking failure event. The mobile terminal may acquire current time information and store the current time information and an unlocking failure identification in correspondence to each other. In addition, when the mobile terminal determines that the user's state information meets the preset state condition, it may further actuate its photographing component to capture image data. The mobile terminal may shoot a picture or a video having a preset duration, and then store the shot image data, the acquired time information and the unlocking failure identification in correspondence to one another to obtain an unlocking failure record. The target user may click an option on the mobile terminal which corresponds to the unlocking failure record, and then the mobile terminal may display the stored unlocking failure record. In this way, the target user can know a history of unlocking of the mobile terminal by viewing the unlocking failure record.

Optionally, a screen may be locked according to the state of the target user by performing a process as follows: detecting a current screen state; and locking the screen if the user's state information meets the preset state condition and the current screen state is an unlocked state.

In practical implementation, the mobile terminal may detect the current screen state in real time. When receiving the state information of the target user sent by the target wearable device, the mobile terminal may determine whether the state information meets the preset state condition. If yes, the mobile terminal may determine whether the current screen state is an unlocked state. If the current screen state is the unlocked state, the mobile terminal may lock the screen. If the current screen state is a locked state, the mobile terminal may maintain the screen-locked state. For example, when detecting that state information of a target user is a sleep state, a smart band may send the state information to a mobile terminal. After receiving the state information, the mobile terminal may determine whether the current screen state is an unlocked state. If yes, the mobile terminal locks its screen. In this way, when the user is in a sleep state, the mobile terminal may lock its screen automatically, thereby improving information security for the user.

In the embodiments of this invention, currently input unlocking information is detected; the detected unlocking information is compared with preset reference unlocking information; a user's state information sent by a target wearable device worn by the user is acquired if the detected unlocking information matches the preset reference unlocking information; unlocking is performed if the user's state information does not meet a preset state condition, and a screen-locked state is maintained if the user's state information meets the preset state condition. In this way, when the user's state information meets the preset state condition (for example, when the user is in a sleep state), unlocking will not be performed even if the detected unlocking information matches the preset reference unlocking information, thereby improving information security for the user.

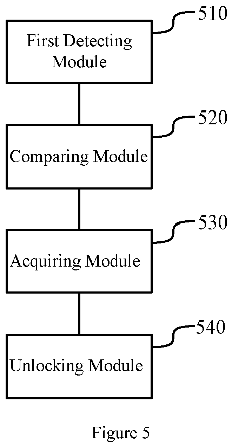

Based on the same technical concept, an embodiment of this invention also provides an unlocking apparatus. As shown in Fig. 5, the apparatus comprises: a first detecting module 510, a comparing module 520, an acquiring module 530 and an unlocking module 540.

The first detecting module 510 is configured to detect currently input unlocking information. The comparing module 520 is configured to compare the detected unlocking information with preset reference unlocking information. The acquiring module 530 is configured to acquire a user's state information sent by a target wearable device worn by the user if the detected unlocking information matches the preset reference unlocking information. The unlocking module 540 is configured to perform unlocking if the user's state information does not meet a preset state condition and to maintain a screen-locked state if the user's state information meets the preset state condition.

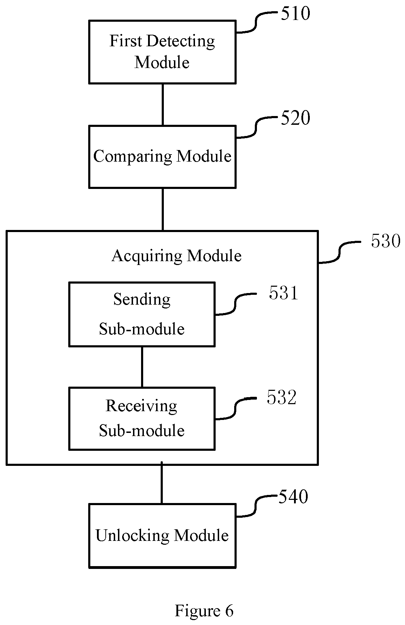

Optionally, as shown in Fig. 6, the acquiring module 530 comprises: a sending sub-module 531 configured to send a state information request to the target wearable device worn by the user to cause the target wearable device to detect the user's current state information; and a receiving sub-module 532 configured to receive the state information sent by the target wearable device.

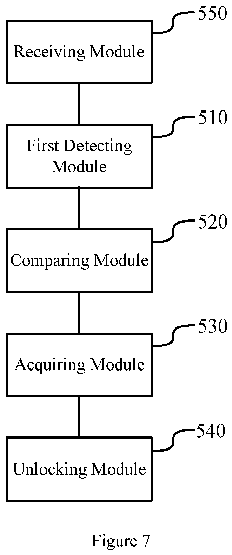

Optionally, as shown in Fig. 7, the apparatus further comprises: a receiving module 550 configured to receive the user's state information sent by the target wearable device worn by the user and store the user's state information.

The acquiring module is configured to acquire the stored user's state information.

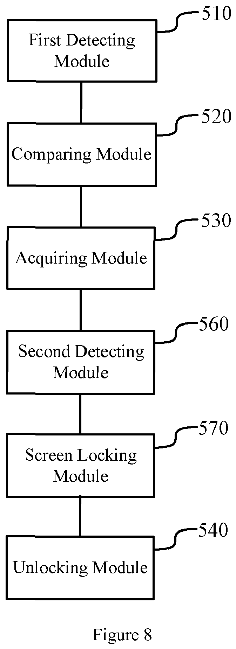

Optionally, as shown in Fig. 8, the apparatus further comprises: a second detecting module 560 configured to detect a current screen state; and a screen locking module 570 configured to lock the screen if the user's state information meets the preset state condition and the current screen state is an unlocked state.

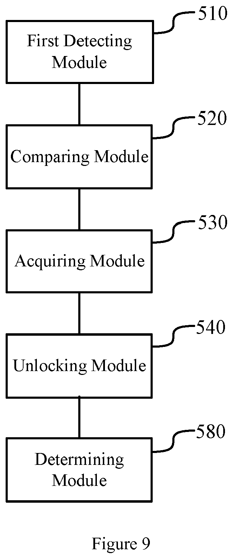

Optionally, as shown in Fig. 9, the apparatus further comprises: a determining module 580 configured to determine an application corresponding to the acquired user's state information based on pre-stored correspondences between user's state information and applications and to set the determined application to a disabled state.

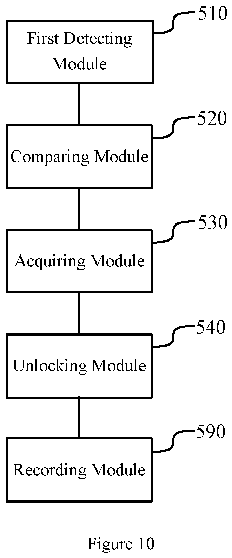

Optionally, as shown in Fig. 10, the apparatus further comprises: a recording module 590 configured to record an unlocking failure event if the detected unlocking information matches the preset reference unlocking information and the user's state information meets the preset state condition.

In the embodiments of this invention, currently input unlocking information is detected; the detected unlocking information is compared with preset reference unlocking information; a user's state information sent by a target wearable device worn by the user is acquired if the detected unlocking information matches the preset reference unlocking information; unlocking is performed if the user's state information does not meet a preset state condition, and a screen-locked state is maintained if the user's state information meets the preset state condition. In this way, when the user's state information meets the preset state condition (for example, when the user is in a sleep state), unlocking will not be performed even if the detected unlocking information matches the preset reference unlocking information, thereby improving information security for the user.

It should be noted that, when the unlocking apparatus provided by the above embodiments perform unlocking, the above divisions into various functional modules are only described for exemplary illustration. In practical application, the above functions may be implemented by different functional modules as required; that is, the internal structure of the apparatus may be divided into different functional modules to realize all or part of the above-described functions. Further, since the unlocking apparatus provided in the above embodiments and the unlocking methods provided in the embodiments belong to the same concept, reference can be made to the method embodiments for the specific implementation of the unlocking apparatus, which will not be described here redundantly.

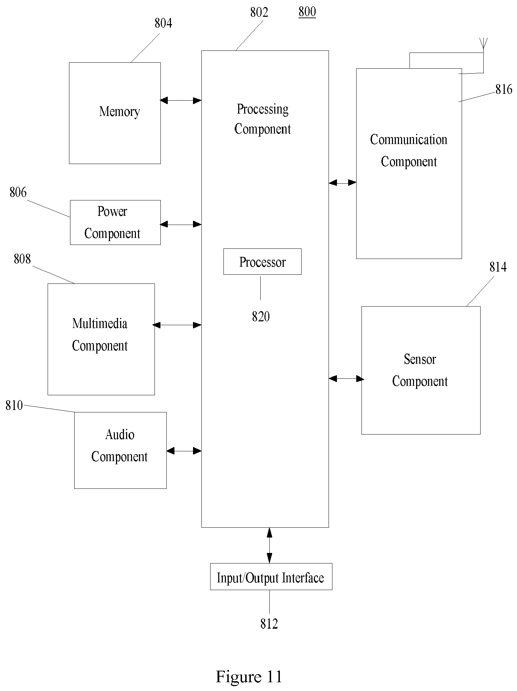

Another embodiment of this invention provides a schematic structural diagram of a terminal 800. Referring to Fig. 11, the terminal 800 may comprise one or more following components: a processing component 802, a memory 804, a power component 806, a multimedia component 808, an audio component 810, an input/output (I/O) interface 812, a sensor component 814 and a communication component 816.

The processing component 802 typically controls overall operations of the terminal 800, such as the operations associated with display, phone calls, data communications, camera operations and recording operations. The processing component 802 may include one or more processors 820 to execute instructions to perform all or part of the steps in the above described methods. Moreover, the processing component 802 may include one or more modules which facilitate the interaction between the processing component 802 and other components. For example, the processing component 802 may comprise a multimedia module to facilitate the interaction between the multimedia component 808 and the processing component 802.

The memory 804 is configured to store various types of data to support operations of the terminal 800. Examples of such data comprise instructions for any applications or methods operated on the terminal 800, various kinds of data, messages, pictures, video, etc. The memory 804 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may comprise a power supply management system, one or more power sources, and any other components associated with the generation, management, and distribution of power in the terminal 800.

The multimedia component 808 comprises a screen providing an output interface between the terminal 800 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 comprises one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, presence or absence of user's contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer-readable storage medium comprising instructions, such as comprised in the memory 804, executable by the processor 820 in the terminal 800, for performing the above-described methods. For example, the non-transitory computer-readable storage medium may be a ROM, a RAM, a CD-ROM, a magnetic tape, a floppy disc, an optical data storage device, and the like.

The non-transitory computer-readable storage medium has stored therein instructions that, when executed by a processor of a terminal, cause the terminal to perform the above described method, which comprises: detecting currently input unlocking information; comparing the detected unlocking information with preset reference unlocking information; acquiring a user's state information sent by a target wearable device worn by the user if the detected unlocking information matches the preset reference unlocking information; performing unlocking if the user's state information does not meet a preset state condition, and maintaining a screen-locked state if the user's state information meets the preset state condition.

Optionally, acquiring the user's state information sent by the target wearable device worn by the user comprises: sending a state information request to the target wearable device worn by the user to cause the target wearable device to detect the user's current state information; and receiving the state information sent by the target wearable device.

Optionally, before detecting the currently input unlocking information, the method further comprises: receiving the user's state information sent by the target wearable device worn by the user, and storing the user's state information. Acquiring the user's state information sent by the target wearable device worn by the user comprises: acquiring the stored user's state information.

Optionally, after receiving the user's state information sent by the target wearable device worn by the user and storing the user's state information, the method further comprises: detecting a current screen state; and if the user's state information meets the preset state condition and the current screen state is an unlocked state, locking the screen.

Optionally, the method further comprises: determining an application corresponding to the acquired user's state information based on pre-stored correspondences between user's state information and applications, and setting the determined application to a disabled state.

Optionally, the method further comprises: if the detected unlocking information matches the preset reference unlocking information and the user's state information meets the preset state condition, recording an unlocking failure event.

In the embodiments of this invention, currently input unlocking information is detected; the detected unlocking information is compared with preset reference unlocking information; a user's state information sent by a target wearable device worn by the user is acquired if the detected unlocking information matches the preset reference unlocking information; unlocking is performed if the user's state information does not meet a preset state condition, and a screen-locked state is maintained if the user's state information meets the preset state condition. In this way, when the user's state information meets the preset state condition (for example, when the user is in a sleep state), unlocking will not be performed even if the detected unlocking information matches the preset reference unlocking information, thereby improving information security for the user.

It should be understood by those skilled in the art that all or part of the steps of the above embodiments may be implemented through hardware or through programs that instruct related hardware. The programs may be stored in a computer-readable storage medium which may be a read-only memory, a magnetic disk, an optical disk or the like.

The foregoing descriptions are only preferred embodiments of the invention, and do not intend to limit the invention.

## Claims

1. An unlocking method, comprising:
detecting (101) currently input unlocking information;
comparing (102) the detected unlocking information with preset reference unlocking information;
acquiring (103) a user's state information sent by a target wearable device worn by the user, if the detected unlocking information matches the preset reference unlocking information; and
performing (104) unlocking if the user's state information does not meet a preset state condition, and maintaining a screen-locked state if the user's state information meets the preset state condition.

2. The method according to claim 1, wherein acquiring the user's state information sent by the target wearable device worn by the user comprises:
sending a state information request to the target wearable device worn by the user to cause the target wearable device to detect the user's current state information; and
receiving the state information sent by the target wearable device.

3. The method according to claim 1, wherein before detecting the currently input unlocking information, the method further comprises: receiving the user's state information sent by the target wearable device worn by the user, and storing the user's state information; and
acquiring the user's state information sent by the target wearable device worn by the user comprises: acquiring the stored user's state information.

4. The method according to claim 3, wherein, after receiving the user's state information sent by the target wearable device worn by the user and storing the user's state information, the method further comprises:
detecting a current screen state; and
if the user's state information meets the preset state condition and the current screen state is an unlocked state, locking the screen.

5. The method according to claim 1, further comprising: determining an application corresponding to the acquired user's state information based on pre-stored correspondences between user's state information and applications, and setting the determined application to a disabled state.

6. The method according to claim 1, further comprising: if the detected unlocking information matches the preset reference unlocking information and the user's state information meets the preset state condition, recording an unlocking failure event.

7. An unlocking apparatus, comprising:
a first detecting module (510) configured to detect currently input unlocking information;
a comparing module (520) configured to compare the detected unlocking information with preset reference unlocking information;
an acquiring module (530) configured to acquire a user's state information sent by a target wearable device worn by the user, if the detected unlocking information matches the preset reference unlocking information; and
an unlocking module (540) configured to perform unlocking if the user's state information does not meet a preset state condition and to maintain a screen-locked state if the user's state information meets the preset state condition.

8. The apparatus according to claim 7, wherein the acquiring module (530) comprises:
a sending sub-module (531) configured to send a state information request to the target wearable device worn by the user to cause the target wearable device to detect the user's current state information; and
a receiving sub-module (532) configured to receive the state information sent by the target wearable device.

9. The apparatus according to claim 7, further comprising: a receiving module configured to receive the user's state information sent by the target wearable device worn by the user and store the user's state information, wherein
the acquiring module (530) is configured to acquire the stored user's state information.

10. The apparatus according to claim 9, further comprising:
a second detecting module (560) configured to detect a current screen state; and
a screen locking module (570) configured to lock the screen if the user's state information meets the preset state condition and the current screen state is an unlocked state.

11. The apparatus according to claim 7, further comprising: a determining module (580) configured to determine an application corresponding to the acquired user's state information based on pre-stored correspondences between user's state information and applications and to set the determined application to a disabled state.

12. The apparatus according to claim 7, further comprising: a recording module (590) configured to record an unlocking failure event if the detected unlocking information matches the preset reference unlocking information and the user's state information meets the preset state condition.

13. An unlocking apparatus, comprising:
a processor (820); and
a memory (804) configured to store instructions executable by the processor (820),
wherein the processor (820) is configured to perform the method of any of claims 1-6.

14. A recording medium readable by a computer and having recorded thereon a computer program including instructions for executing the steps of an unlocking method according to any one of claims 1 to 6.
